# EUROPÄISCHE PATENTSCHRIFT

(11) **EP 2 449 874 B1**
(45) Veröffentlichungstag und Bekanntmachung des Hinweises auf die Patenterteilung: **29.07.2015**
(21) Anmeldenummer: 10405216.2
(22) Anmeldetag: 09.11.2010
(51) Int. Cl.: A01D 89/00, A01D 84/00

(54) **Verfahren zur Bergung von gemähtem, auf der gemähten Bodenoberfläche liegenden landwirtschaftlichen Halmgut**
Method for collecting mowed agricultural crops lying on a mowed surface
Procédé de récupération de matières en brins agricoles tondues et se trouvant sur la surface tondue au sol

(43) Veröffentlichungstag der Anmeldung: 09.05.2012
(60) Teilanmeldung: 15000286.3
(73) Patentinhaber: Rapid Technic AG, 8956 Killwangen (CH)
(72) Erfinder: Hirschi, Michael, 3555 Trubschachen (CH)
(74) Vertreter: Fenner, Werner

(56) Entgegenhaltungen:
- EP-A1- 0 069 059
- EP-A1- 2 047 739
- DE-A1- 3 906 511
- DE-C- 949 782
- US-A- 2 636 335
- WEISSTEINER NORBERT: 'Heuschieber / Weissteiner', [Online] 06 August 2008, Seite 1, XP054975203 Gefunden im Internet: <URL:http://www.youtube.com/watch?v=lT9p3j0 lXqY> [gefunden am 2013-09-05]
- WOLFIASTER84: 'Heuschieber Oberwald 2. schnitt.AVI', [Online] 11 Juni 2010, Seite 1, XP054975204 Gefunden im Internet: <URL:http://www.youtube.com/watch?v=G_PiwLT dvj0> [gefunden am 2013-09-05]

## Beschreibung

Die Erfindung betrifft ein Verfahren zur Bergung von gemähtem, auf der gemähten Bodenoberfläche liegenden, landwirtschaftlichen Halmgut, das in Fortbewegungsrichtung in **etwa horizontalen Schichtenlinien** über die Förderbreite einer Fördereinrichtung von der Bodenoberfläche aufgenommen und nach einer Seite abgelegt wird.

Die Erfindung betrifft weiterhin zur Durchführung des Verfahrens eine an **der** Frontseite einer **einachsigen, an Holmen manuell lenkbar geführten Arbeitsmaschine anbaubare, mit einer frontseitigen Zapfwelle der Arbeitsmaschine antriebsverbindbare** Fördereinrichtung, **mit einer das gemähte Halmgut mittels rotierenden Förderzinken** von der Bodenoberfläche **aufnehmenden** Aufnahmevorrichtung und **einem** dieser **in** Förderrichtung nachgeschalteten, **sich quer zur Fortbewegung erstreckenden, das Halmgut nach einer Seite umlenkenden Anstellorgan, das eine nach oben konkav zum Förderstrom gekrümmte Gleitfläche aufweist.**

Verfahren der eingangs genannten Art werden seit mehreren Jahrzehnten mit sogenannten Kreiselschwadern oder Universalmaschinen erfolgreich durchgeführt, die an der Heckseite oder der Frontseite eines Traktors oder ähnlichen Fahrzeuges, beispielsweise an einer Dreipunkt-Anhängevorrichtung anbaubar sind.

Diese Geräte oder Maschinen dienen dem Zusammenrechen von auf einer gemähten landwirtschaftlichen Bodenoberfläche liegendem landwirtschaftlichen Halmgut, das von einem verteilten Zustand in eine Schwadformation versetzt wird, um beispielsweise die zur Ausbreitung des Halmguts zu Silage oder Heu freigerechte Bodenoberfläche über Nacht zur Trocknung freilegen zu können oder um das Halmgut von einer Schwadformation mittels Lade- oder Erntewagen aufnehmen zu können. Bei der Bildung einer Schwad wird ein Teil des Halmguts von einer verteilten resp. gezetteten Formation getrennt und eine gerechte Fahrgasse gebildet, die beim Ziehen einer nächsten Schwad durch den Traktor befahren wird.

Die deutsche Offenlegungsschrift DE 30 21 605 A1 betrifft eine Heuwerbungsmaschine resp. eine Universalmaschine zum Schwadziehen, Wenden und Zetten von auf einer gemähten Bodenoberfläche liegendem gemähtem Halmgut. Diese Maschine kann in eine Stellung versetzt werden, in der die an in einer Horizontalebene an umlaufenden Recharmen befestigten Rechzinken das liegende Halmgut durch eine Schwenkbewegung der Rechzinken während dem Umlauf auf eine seitlich verlaufende Schwad zusammenrechen oder umgestellt werden, so dass die Rechzinken starr nach unten stehen, um das Halmgut zu wenden und zu zetten.

Zum Zweck des seitlichen Schwadbildens wurde wie bei den oben beschriebenen Maschinen gemäss EP 0 069 059 A1 ein fahrbares, an der Heckseite eines Traktors oder dgl. anbaubares, fahrbares Gerät entwickelt, das eine Schnittgutaufnahme-Vorrichtung zur Behandlung von geschnittenem Pflanzengut aufweist. Dabei wird das zum Trocknen auf dem Feld liegende, bereits schwadenförmig geordnete Pflanzengut vom fahrbaren Gerät mittels einer Schnittgutaufnahme-Vorrichtung vom Boden aufgenommen und auf einer mindestens teilweise schraubenlinienförmig, räumlich gebogenen Leitfläche geführt, bis es sich überschlägt und über eine Abrutschsicherung von der Leitfläche auf den Boden abgelegt wird.

Die vorveröffentlichte US 2'636'335 A vermittelt eine Maschine zum Rechen und Wenden von gemähtem, auf einem landwirtschaftlichen Feld oder Acker liegenden Heu oder Stroh resp. eine Bearbeitungsmaschine zum Wenden von aufgenommenem Gut, das feucht geworden und zu trocknen ist.

In Hanglagen jedoch sind diese Maschinen nicht zuletzt wegen der Umsturzgefahr der Traktoren nicht geeignet, zumal das Mähen in hügeligen Gebieten oft mit sogenannten Motormähern erfolgt, die eine angetriebene Fahrachse mit einem vorgelagerten, auf dem Boden abgestützten Mähbalken aufweisen und von einer Bedienungsperson geführt und gesteuert werden. So kommt es oftmals vor, dass das liegende Halmgut, insbesondere in steilen Hanglagen mittels handrechen von oben nach unten zusammengerecht und dazwischen aufgenommen und nach unten getragen werden muss.

Diese Vorgehensweise ist umständlich, arbeitsintensiv, zeitraubend und nur mit mehreren Personen einigermassen wirtschaftlich und im Interesse einer natürlichen Landwirtschaft durchführbar.

Es ist Aufgabe der vorliegenden Erfindung, ein Verfahren zur Bergung von gemähtem landwirtschaftlichen Halmgut zu schaffen, durch welches das Halmgut auf maschinelle Art wirtschaftlich aufgenommen resp. zusammengetragen und voraussehbaren Schlechtwetterlagen ausgewichen werden kann.

Bei der Lösung der Aufgabe geht die Erfindung einen neuen, für den Fachmann der Landtechnik überraschenden Weg resp. erfindungsgemäss wird die Aufgabe dadurch gelöst, dass das durch **eine aus rotierenden Förderzinken bestehende Aufnahmevorrichtung der Fördereinrichtung** von der Bodenoberfläche angehobene **gemähte** Halmgut auf dem Weitertransport **von einem etwa horizontalen Förderabschnitt der** Fördereinrichtung **ausgehend, unter Nutzung des durch die Aufnahmevorrichtung der Fördereinrichtung** erzeugten Förderstroms an einem als Stauwand ausgebildeten Anstellorgan umgelenkt und nach einer Seite des auf der Bodenoberfläche liegenden Halmguts abgelegt wird.

Diese Vorgehensweise wirkt sich bei angetrocknetem oder getrocknetem Halmgut wie Heu oder Emd günstig aus, indem ein seitlich wirkender Ueberrolleffekt an dem die Förderrichtung verlassenden Halmgut resp. ein lawinenartiges Verschieben des Halmguts entsteht.

Dieser Effekt tritt auch auf horizontalem Gelände in reduziertem Mass ein, wobei auch da wie dort eine Durchlüftung und Auflockerung des Halmguts eintritt.

Sowohl für die Förderung als auch die Durchlüftung und Auflockerung des Halmguts ist es günstig, wenn das jeweils mit dem nächsten Bergungsdurchgang das nach der Seite des auf der Bodenoberfläche liegenden Halmguts abgelegte Halmgut über die Förderbreite der Fördereinrichtung resp. einer Aufnahmevorrichtung mit noch auf der Bodenoberfläche liegendem Halmgut (erneut) angehoben und nach der Seite des liegenden Halmguts abgelegt wird, eine Vorgehensweise, die in der Landtechnik noch nicht bekannt ist.

Vorzugsweise wird das Halmgut zur Entwicklung eines auf den Förderstrom wirkenden Gegendrucks und zur Begünstigung der seitlichen Umlenkung auf einer konvex gekrümmten Bahn an der Stauwand hochgeführt.

Das Verfahren kann dadurch unterstützt werden, wenn das Halmgut nach dem Anheben von der Bodenoberfläche auf einem horizontalen Förderabschnitt der Fördereinrichtung an die Stauwand überführt wird.

Zweckmässig wird das Halmgut schwadbildend nach der Seite des liegenden Halmguts abgelegt, sodass nach mehreren Durchgängen ein erhebliches Erntevorkommen entsteht, das ein Nachrechen von liegengebliebenem Halmgut überflüssig macht.

Zur Durchführung des Verfahrens eignet sich eine an der Frontseite einer **einachsigen, an Holmen manuell lenkbar geführten Arbeitsmaschine** anbaubare, **mit einer frontseitigen Zapfwelle der Arbeitsmaschine antriebsverbindbare** Fördereinrichtung, **mit einer das gemähte Halmgut mittels** rotierenden Förderzinken von der Bodenoberfläche **aufnehmenden** Aufnahmevorrichtung und **einem** dieser in **Förderrichtung** nachgeschalteten, **sich quer zur** Fortbewegungsrichtung erstreckenden, **das Halmgut nach einer Seite umlenkenden Anstellorgan, das eine nach oben konkav zum Förderstrom gekrümmte Gleitfläche** aufweist und sich erfindungsgemäss dadurch auszeichnet, dass **zwischen Aufnahmevorrichtung und Anstellorgan eine an die Aufnahmevorrichtung anschliessender, das Halmgut etwa horizontal weitertransportierender horizontaler Förderabschnitt der Fördereinrichtung angeordnet ist,** sodass ein geringer Reibungswert resp. hoher Gleiteffekt entsteht.

Es erweist sich als zweckmässig, wenn das Anstellorgan an dem oberen Ende etwa senkrecht zur Bodenoberfläche ausgerichtet ist, um die Einrichtung resp. Maschine durch Meidung von unnötigem Gewicht bedienungsfreundlich und leistungsoptimiert zu gestalten.

Zur Begünstigung des seitlichen Abflusses resp. des Halmguts im Förderstrom ist das Anstellorgan zumindest vor einem seitlichen Förderende durch einen sich in Förderrichtung zunehmend erweiternden Durchtrittsquerschnitt ausgebildet.

Durch die Verstellbarkeit des Anstellorgans ist es zweckmässig, wenn das Förderende des Förderabschnitts der Fördereinrichtung durch einen auf dem vorderen Ende des Anstellorgans aufliegenden Ueberführungselement ausgebildet ist, das die darunter angeordneten, teilweise freigelegten Antriebselemente gegen Verschmutzung von oben schützt.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer erfindungsgemässen Fördereinrichtung an einer einachsigen Arbeitsmaschine mit Holmlenkung,
- Fig. 2: eine planimetrische Darstellung einer Draufsicht auf die in Fig. 1 veranschaulichte, angebaute Fördereinrichtung,
- Fig. 3: eine Seitenansicht der in den Fig. 1 und 2 dargestellten, angebauten Fördereinrichtung,
- Fig. 4: eine Ansicht von der Bedienungsseite der in den Fig. 1 bis 3 gezeigten, angebauten Fördereinrichtung,
- Fig. 5: eine räumliche Darstellung der in den Fig. 1 bis 4 ersichtlichen Fördereinrichtung von der Bedienungsseite aus, und
- Fig. 6: eine räumliche Darstellung der Fördereinrichtung ohne Anbaugestell und Anstellorgan von der Bedienungsseite aus.

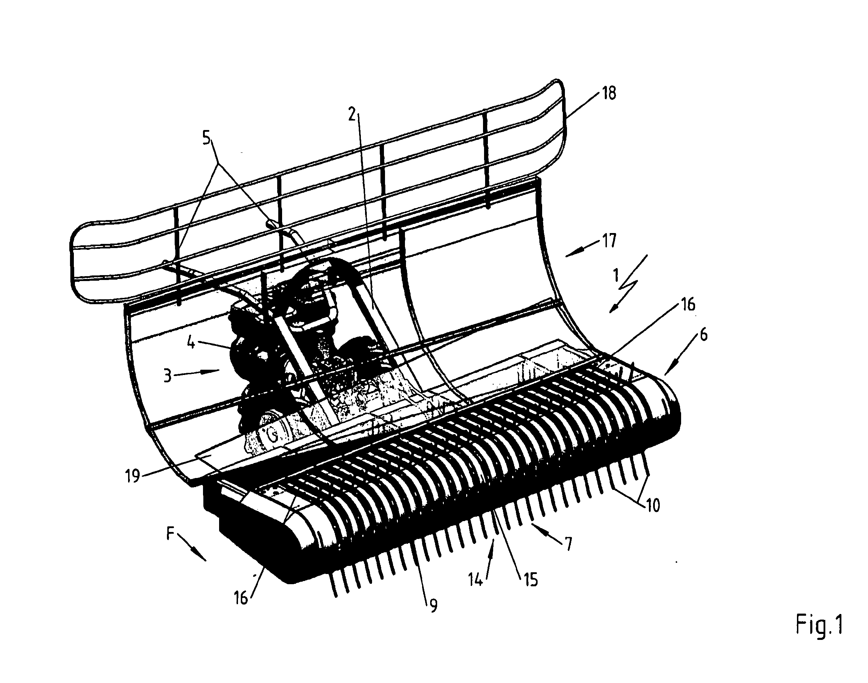

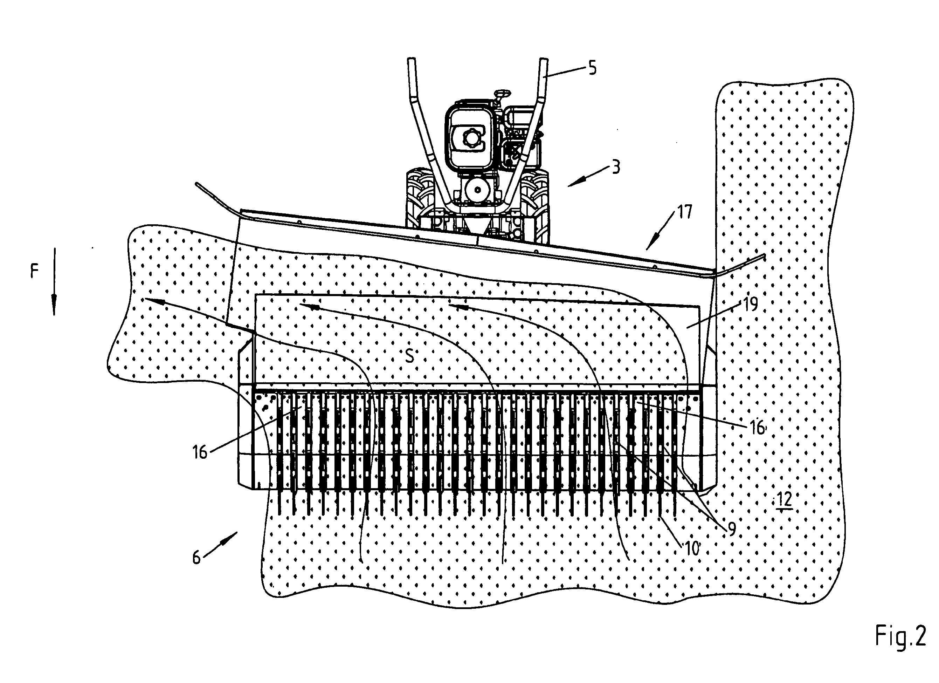

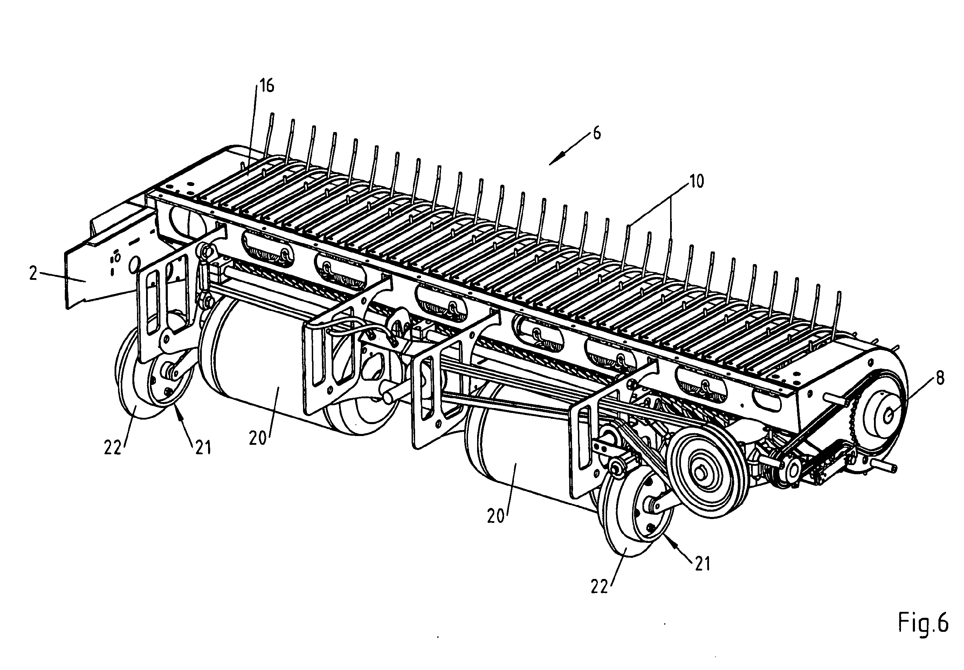

Fig. 1 zeigt eine Fördereinrichtung 1 resp. eine Einrichtung zum Fördern von gemähtem, auf der Bodenoberfläche eines landwirtschaftlichen Feldes liegenden Halmgut 12, wie Gras, Heu, Emd oder dgl. Erntegut. Die Fördereinrichtung 1 weist ein Gestell 2 auf, durch welches sie mit einer einachsigen Arbeitsmaschine 3, beispielsweise deren Fahrwerk oder Frontausleger verbunden ist. Die einachsige Arbeitsmaschine ist auch als Motormäher bekannt und weist an der Frontseite einen von einer Zapfwelle angetriebenen Mähbalken auf, der zum Anbau der Fördereinrichtung 1 demontierbar ist. Die in Fig. 1 dargestellte Arbeitsmaschine 3 ist selbstfahrend, mit einem Verbrennungsmotor 4 ausgestattet und mittels Holmen 5 von einer Bedienungsperson lenk- und steuerbar. Wie der Mähbalken, so ist auch die Fördereinrichtung 1 an der Frontseite der Arbeitsmaschine 3 befestigt und mit deren Zapfwelle antriebsverbunden. Pfeil F vermittelt die Fortbewegungs- resp. Arbeitsrichtung der Maschine. Selbstverständlich könnte die Arbeitsmaschine auch zwei resp. mehrachsig ausgebildet und mit einem Fahrersitz für die Bedienungsperson ausgebildet sein. Die Fördereinrichtung 1 ist an der Vorderseite mit einer Aufnahmevorrichtung 6, vorzugsweise einem Pick-up, ausgebildet, die sich quer zur Fortbewegungsrichtung F der Maschine erstreckt. Diese Aufnahmevorrichtung 6 besteht aus einem angetriebenen Zinkenrotor 7, der an einer quer zur Fortbewegungsrichtung F gelagerten Welle 8 (Fig. 6) nebeneinander angeordnete, gemeinsam drehende Zinkenräder 9 mit vorzugsweise gesteuerten Förder- oder Arbeitszinken 10 aufweist. Der Zinkenrotor 7 dreht zur Aufnahme des auf der Bodenoberfläche 11 (Fig. 2) liegenden Halmguts 12 in Bodennähe -gemäss Pfeil P- gleichsinnig zur Fortbewegungsrichtung F. Die Förderzinken 10 heben das Halmgut 12 von der Bodenoberfläche 11 ab resp. an und transportieren es in den oberschlächtigen Förderbereich des Zinkenrotors 7, wo es anschliessend von den nach unten tauchenden Förderzinken 10 gelöst und an einen der Aufnahmevorrichtung 6 nachgeschalteten Förderabschnitt 13 der Fördereinrichtung 1 übergeben wird. Die Förderwirkung auf dem Förderabschnitt 13 entsteht durch die vom Zinkenrotor 7 auf das nachfolgende Halmgut 12 ausgeübte Förderkraft resp. Förderwirkung, mit der das Halmgut 12 entgegen der Fortbewegungsrichtung F der Maschine vorangestossen wird. Der Förderabschnitt 13 könnte zum selben Zweck durch nebeneinander, in Förderrichtung P umlaufende endlose Förderriemen ausgebildet sein. Der Förderabschnitt 13 ist im Anschluss an den Zinkenrotor 7, dessen Förderzinken 10 im Förderbereich gegenüber einem konzentrisch angeordneten Leitorgan 14, aus zwischen den Zinkenrädern 9 angeordneten Leitlamellen 15, auch Korbbänder genannt, beispielsweise anstelle von umlaufenden Förderriemen, durch an die Leitlamellen 15 angesetzte Stützlamellen 16 ausgebildet, auf denen das Halmgut 12 in Förderrichtung Z gleitet.

Im Anschluss an den Förderabschnitt 13 wird das Halmgut 12 weiterhin in einem Förderstrom S gegen ein nach oben verlaufendes, mit dem Gestell 2 verbundenen Anstellorgan 17, das den Förderstrom nach oben und auf eine bestimmte Seite lenkt, auf der das Halmgut 12 auf der Bodenoberfläche 11 liegt (Fig. 2). Hierzu ist das Anstellorgan 17 durch eine von dem, vorzugsweise etwa horizontalen Förderabschnitt 13 ausgehende, nach oben konkav zum Förderstrom S hin gekrümmten Gleit- oder Anstellfläche ausgebildet, entlang der der Förderstrom S des Halmguts 12 zur einen Seite hin umgelenkt wird.

Bei angewandtem vorgeschlagenen Verfahren wird das Halmgut 12 nach der Seite des auf der Bodenoberfläche 11 liegenden Halmguts 12 umgeleitet und dort abgelegt. D.h., dass bei jedem erneuten Bergungsdurchgang der Maschine, vorzugsweise am Rand eines Feldes beginnend, das von der Bodenoberfläche 11 aufgenommene Halmgut 12 auf liegendes abgelegt und beim nächsten Durchgang zusammen mit (darunter) liegendem Halmgut 12 erneut aufgenommen und wiederum auf der Seite des liegenden Halmguts 12 abgelegt wird.

Findet die Bergung des Halmguts 12 in einer Hanglage statt, dann ist mit dieser vorteilhaft am oberen Ende des Geländes zu beginnen, um das Gefälle resp. die Neigung für ein begünstigtes Verschieben des Halmguts 12 nach unten nutzen zu können.

Handelt es sich um ein etwa horizontales Gelände, auf dem die Bergung stattfindet, kann das Anstellorgan 17 um eine senkrecht zur Bodenoberfläche 11 stehende Achse verschwenkt bzw. verstellt und festgestellt werden. Selbstverständlich kann diese Möglichkeit auch im abfallenden Gelände benutzt werden, wobei die Art des Halmguts bzw. dessen Trocknungsgrad die Möglichkeit beeinflussen kann. D.h., dass bei Beginn eines anschliessenden, nächsten Bergungsdurchgangs in einer Hanglage, bei gewendeter Maschine, das Anstellorgan 17 nach der anderen Seite förderwirksam zu verstellen ist, um das Gefälle nutzen zu können.

Durch diese Vorgehensweise bildet sich jeweils eine Schwad des Halmguts 12 resp. auf dem auf der Bodenoberfläche 11 liegenden Halmgut12.

Durch das Verschwenken des Anstellorgans 17 um die senkrechte Achse entsteht jeweils zur Ablageseite des Halmguts 12 hin resp. zur Seite des auf der Bodenoberfläche 11 liegenden Halmguts 12 hin, ein sich zunehmend erweiternder Durchtrittsquerschnitt, der die Umlenkung und den Fluss des Förderstroms S positiv beeinflusst.

Den Figuren ist weiterhin zu entnehmen, dass das Anstellorgan 17 an dem oberen Ende etwa senkrecht zur Bodenoberfläche 11 gerichtet ausgebildet ist, wodurch das Halmgut 12 nicht über den oberen Rand des Anstellorgans 17 fliessen kann. Ueber dem Anstellorgan 17 ist ein, beispielsweise an diesem oder dem Gestell 2 befestigtes Schutzgitter 18 angeordnet.

Durch das Feststellen des Anstellorgans 17 nach einer Seite, entsteht -wie Fig. 1 zeigt- eine Oeffnung bzw. ein Zugang von Halmgut und Schmutz zu den darunter angeordneten Antriebsorganen oder Teilen der Fördereinrichtung 1, wodurch der Betrieb der Maschine gestört werden könnte. Hierzu ist an dem Förderende des Förderabschnitts 13 der Fördereinrichtung 1 ein vorzugsweise flexibles Ueberführungs- oder Abdeckelement 19 befestigt, das auf dem in Förderrichtung des Halmguts 12 vorderen Ende des Anstellorgans 17 aufliegt und die besagte Oeffnung abdeckt.

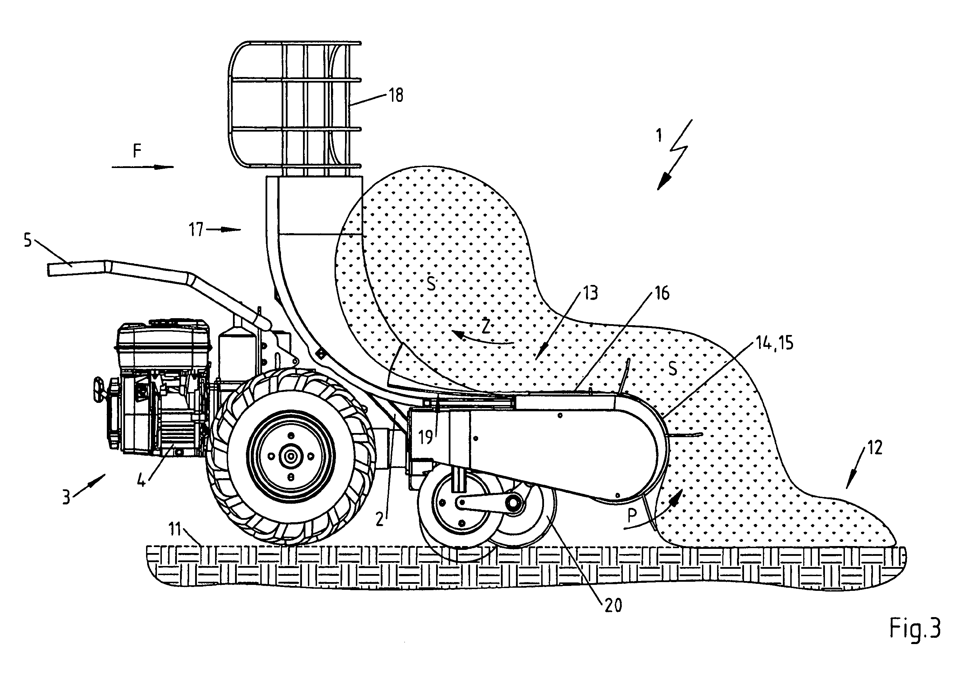

Fig. 3 zeigt die Maschine in einer Seitenansicht, insbesondere den in der Längsmitte geschnittenen Förderstrom S des Halmguts 12 von der Aufnahme von der Bodenoberfläche 11 bis zum Anstellorgan 17, von wo aus der Förderstrom S sich senkrecht zur Zeichnungsebene nach einer Seite bewegt. Weiterhin veranschaulicht Fig. 3 eine von zwei Stützrollen 20, über die die Fördereinrichtung 1 auf der Bodenoberfläche 11 abgestützt ist, sodass während der Fortbewegung ein weitgehend gleichmässiger Abstand der Aufnahmevorrichtung 6 gegenüber der Bodenoberfläche 11 und ein geringer Bodendruck sowie eine günstige Manövrierfähigkeit entsteht.

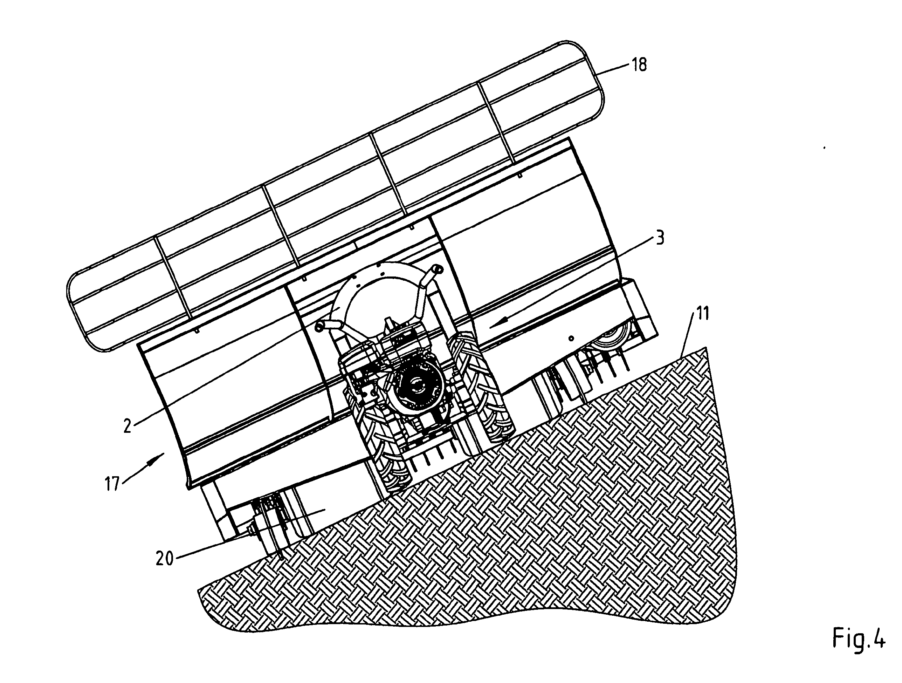

Fig. 4 vermittelt die Maschine von der Bedienungsseite aus, in einer Hanglage.

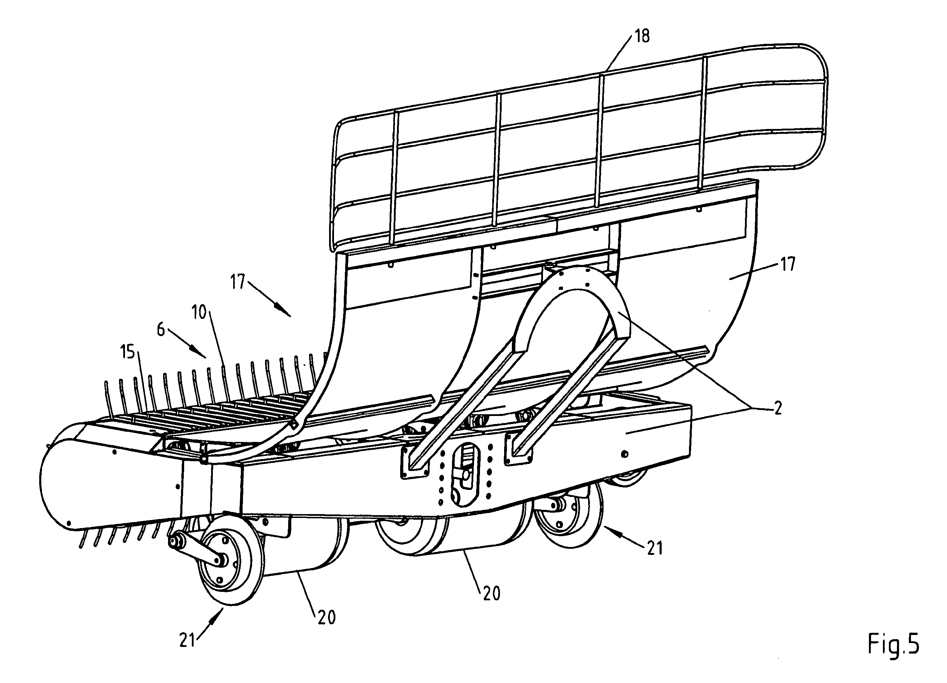

In Fig. 5 ist dieselbe Ansicht räumlich dargestellt. Insbesondere in Hanglagen bei einer Fortbewegung in etwa horizontalen Schichtenlinien tendiert die Maschine aufgrund ihres Gewichtes und dessen unregelmässiger Längsverteilung zum seitlichen Abtriften von der eingeschlagenen Spur bzw. Bahn, was nicht mit Leichtigkeit zu vermeiden oder zu korrigieren ist. Aus diesem Grund ist jeweils benachbart zu den Stützrollen 20 eine an dem Gestell 2 befestigte Spurrolle 21 angeordnet, die am Umfang einen Spurkranz 22 aufweist, der bezüglich der jeweiligen Stützrollenauflagefläche verstellbar ist, d.h. dass die Spurrollen 21 im ebenen bzw. horizontalen Gelände gegenüber den jeweiligen Auflageflächen der Stützrollen 20 angehoben werden können, sodass sie keinen Bodenkontakt haben oder, in geneigtem Gelände wie in Fig. 4, können die Spurrollen 21 gegenüber den Stützrollen 20 abgesenkt werden, so dass ihre Spurkränze 22 bei auf der Bodenoberfläche 11 aufgesetzten Stützrollen 20 in den Boden eintauchen.

Es ist auch möglich, die Stützrollen so mit dem Gestell 2 oder dem Fahrwerk der Arbeitsmaschine 3 über eine Verstellvorrichtung zu verbinden, dass die Fördereinrichtung 1 resp. die Aufnahmevorrichtung 6 bezüglich Abstand zur Bodenoberfläche 11 verstellt werden kann. Solche Ausführungen sind bekannt, sodass sie hier nicht zu beschreiben sind.

Fig. 6 veranschaulicht die Aufnahmevorrichtung 6 und den Förderabschnitt 13 der Fördereinrichtung 1 sowie die Stütz 20- und Spurrollen 21 von der Rückseite der Maschine, nachdem die Arbeitsmaschine 3 und das Anbaugestell sowie das Anstellorgan 17 entfernt worden sind.

## Patentansprüche

1. Verfahren zur Bergung von gemähtem, auf der gemähten Bodenoberfläche liegenden, landwirtschaftlichen Halmgut (12), das in Fortbewegungsrichtung (F) in etwa horizontalen Schichtenlinien jeweils über die Förderbreite einer Fördereinrichtung (1) von der Bodenoberfläche (11) aufgenommen und nach einer Seite abgelegt wird, **dadurch gekennzeichnet, dass** das durch eine aus rotierenden Förderzinken (10) bestehende Aufnahmevorrichtung (6) der Fördereinrichtung (1) von der Bodenoberfläche (11) angehobene gemähte Halmgut (12) auf dem Weitertransport von einem etwa horizontalen Förderabschnitt (13) der Fördereinrichtung (1) ausgehend, unter Nutzung des durch die Aufnahmevorrichtung (6) der Fördereinrichtung (1) erzeugten Förderstromes (S) an einem als Stauwand ausgebildeten Anstellorgan (17) umgelenkt und nach einer Seite des auf der Bodenoberfläche (11) liegenden Halmguts (12) abgelegt wird.

2. Verfahren nach Anspruch 1, **dadurch gekennzeichnet, dass** mit dem jeweils nächsten Bergungsdurchgang das nach der Seite des auf der Bodenoberfläche (11) liegenden Halmguts (12) abgelegte Halmgut (12) über die Förderbreite der Fördereinrichtung (1) mit auf der Bodenoberfläche (11) liegendem Halmgut (12) angehoben und nach der Seite des liegenden Halmguts (12) abgelegt wird.

3. Verfahren nach Anspruch 1 oder 2, **dadurch gekennzeichnet, dass** die Bergung des auf der Bodenoberfläche (11) liegenden Halmguts (12) in parallelen Bergungsdurchgängen resp. Bergungszyklen erfolgt.

4. Verfahren nach einem der Ansprüche 1 bis 3, **dadurch gekennzeichnet, dass** das Halmgut (12) auf einer gekrümmten Bahn an der Stauwand hochgefördert wird.

5. Verfahren nach einem der Ansprüche 1 bis 4, **dadurch gekennzeichnet, dass** das Halmgut (12) nach dem Anheben von der Bodenoberfläche (11) auf einem horizontalen Förderabschnitt (13) der Fördereinrichtung (1) an die Stauwand überführt wird.

6. Verfahren nach einem der Ansprüche 1 bis 5, **dadurch gekennzeichnet, dass** das Halmgut (12) schwadbildend nach der Seite des liegenden Halmguts (12) abgelegt wird.

7. An der Frontseite einer einachsigen, an Holmen (5) manuell lenkbar geführten Arbeitsmaschine (3) anbaubare, mit einer frontseitigen Zapfwelle der Arbeitsmaschine (3) antriebsverbindbare Fördereinrichtung (1) zur Durchführung des Verfahrens nach einem der Ansprüche 1 bis 6, mit einer das gemähte Halmgut (12) mittels rotierenden Förderzinken (10) von der Bodenoberfläche (11) aufnehmenden Aufnahmevorrichtung (6) und einem dieser in Förderrichtung nachgeschalteten, sich quer zur Fortbewegung (F) erstreckenden, das Halmgut (12) nach einer Seite umlenkenden Anstellorgan (17), das eine nach oben konkav zum Förderstrom (S) gekrümmte Gleitfläche aufweist, **dadurch gekennzeichnet, dass** zwischen Aufnahmevorrichtung (6) und Anstellorgan (17) ein an die Aufnamevorrichtung (6) anschliessender, das Halmgut (12) etwa horizontal weitertransportierender horizontaler Förderabschnitt (13) der Fördereinrichtung (1) angeordnet ist.

8. Einrichtung nach Anspruch 7, bei der eine an einer quer zur Fortbewegungsrichtung (F) gelagerten Welle (8) der Aufnahmevorrichtung (6) der Fördereinrichtung (1) nebeneinander angeordnete, gemeinsam drehende Zinkenräder (9) vorgesehen sind, zwischen denen Leitlamellen (15) eines Leitorgans (14) angeordnet sind, **dadurch gekennzeichnet, dass** der in Förderrichtung an die Aufnahmevorrichtung (6) anschliessende Förderabschnitt (13) der Fördereinrichtung (1) durch an die Leitlamellen (15) angesetzte Stützlamellen (16) ausgebildet ist.

9. Einrichtung nach Anspruch 7 oder 8, **dadurch gekennzeichnet, dass** das Anstellorgan (17) an dem oberen Ende etwa senkrecht zur Bodenoberfläche (11) gerichtet ausgebildet ist.

10. Einrichtung nach Anspruch 8 oder 9, **dadurch gekennzeichnet, dass** das Anstellorgan (17) zumindest vor einem seitlichen Förderende einen erweiterten Durchtrittsquerschnitt aufweist.

11. Einrichtung nach einem der Ansprüche 8 bis 10, **dadurch gekennzeichnet, dass** das Förderende des Förderabschnitts (13) der Fördereinrichtung (1) durch ein auf dem vorderen Ende des Anstellorgans (17) aufliegenden Ueberführungselement (19) ausgebildet ist.

12. Einrichtung nach einem der Ansprüche 8 bis 11, **dadurch gekennzeichnet, dass** die Fördereinrichtung (1) durch wenigstens eine mit dem Gestell (2) verbundene Stützrolle (20) ausgebildet ist.

13. Einrichtung nach einem der Ansprüche 7 bis 12, **dadurch gekennzeichnet, dass** benachbart zu einer Stützrolle (20) eine einen Spurkranz (22) aufweisende Spurrolle (21) angeordnet ist.

14. Einrichtung nach Anspruch 13, **dadurch gekennzeichnet, dass** die Spurrolle (21) gegenüber der Stützrolle (20) höhenverstellbar ausgebildet ist.

15. Einrichtung nach Anspruch 13 oder 14, **dadurch gekennzeichnet, dass** die Spurrollen (21), in Fortbewegungsrichtung der Maschine betrachtet, ausserhalb einer Stützrolle (20) angeordnet sind.

## Claims

1. Method of collecting mown agricultural crops (12) lying on the mown surface, said crops being picked up from the ground surface (11) in the direction of movement (F) in approximately horizontal contour lines over the conveying width of a conveying device (1) and deposited on one side, **characterised in that** the mown crops (12) lifted from the ground surface (11) by a pick-up device (6) of the conveying device (1) consisting of rotating conveying tines (10) are deflected at a contact member (17) designed as a baffle wall during further transport departing from an approximately horizontal conveying section (13) of the conveying device (1) using the conveying stream (S) generated by the pick-up device (6) of the conveying device (1) and are deposited to one side of the crops (12) lying on the ground surface (11).

2. Method according to claim 1, **characterised in that**, in each subsequent collecting pass, the crops (12) deposited to the side of the crops (12) lying on the ground surface (11) are lifted together with crops (12) lying on the ground surface (11) over the conveying width of the conveying device (1) and deposited to the side of the crops (12) lying on the ground surface.

3. Method according to claim 1 or claim 2, **characterised in that** the crops (12) lying on the ground surface (11) are collected in parallel collecting passes or collecting cycles.

4. Method according to one of claims 1 to 3, **characterised in that** the crops (12) are conveyed upwards at the baffle wall in a curved path.

5. Method according to one of claims 1 to 4, **characterised in that**, after being lifted from the ground surface (11), the crops (12) are transferred to the baffle wall on a horizontal conveying section (13) of the conveying device (1).

6. Method according to one of claims 1 to 5, **characterised in that** the crops (12) are deposited to the side of the crops (12) lying on the ground surface in such a manner that they form windrows.

7. Conveying device (1) for carrying out the method according to one of claims 1 to 6, wherein said conveying device can be mounted at the front of a single-axle working machine (3) steerable manually via handlebars (5) and can be operatively connected to a front power take-off shaft of the working machine (3), comprising a pick-up device (6) picking up the mown crops (12) from the ground surface (11) by means of rotating conveying tines (10) and a contact member (17) arranged downstream thereof in the conveying direction, extending transversely to the direction of movement (F) and deflecting the crops (12) to one side, said contact member having a sliding surface curved upwardly in a concave manner relative to the conveying stream (S), **characterised in that** a horizontal conveying section (13) of the conveying device (1) arranged downstream of the pick-up device (6) and transporting the crops (12) further in an approximately horizontal manner is arranged between the pick-up device (6) and the contact member (17).

8. Device according to claim 7 provided with tine wheels (9) rotating together and arranged alongside one another on a shaft (8) of the pick-up device (6) of the conveying device (1) mounted transversely to the direction of movement (F), guide plates (15) of a guide element (14) being arranged between said tine wheels, **characterised in that** the conveying section (13) of the conveying device (1) arranged downstream of the pick-up device (6) in the conveying direction is formed by supporting plates (16) mounted on the guide plates (15).

9. Device according to claim 7 or claim 8, **characterised in that** the contact member (17) is directed approximately perpendicularly to the ground surface (11) at its upper end.

10. Device according to claim 8 or claim 9, **characterised in that** the contact member (17) has an expanded passage area at least upstream of a lateral conveying end.

11. Device according to one of claims 8 to 10, **characterised in that** the conveying end of the conveying section (13) of the conveying device (1) is formed by a transfer element (19) lying on the front end of the contact member (17).

12. Device according to one of claims 8 to 11, **characterised in that** the conveying device (1) is formed by at least one supporting roller (20) connected to the frame (2).

13. Device according to one of claims 7 to 12, **characterised in that** a guide roller (21) comprising a flange (22) is arranged adjacent to a supporting roller (20).

14. Device according to claim 13, **characterised in that** the guide roller (21) is vertically adjustable relative to the supporting roller (20).

15. Device according to claim 13 or claim 14, **characterised in that** the guide rollers (21) are arranged outside a supporting roller (20) as viewed in the direction of movement of the machine.

## Revendications

1. Procédé de récupération de matières agricoles en brins (12), fauchées et se trouvant sur la surface du sol, lesquelles sont ramassées à partir de la surface du sol (11) dans le sens de déplacement (F) dans des courbes de niveaux approximativement horizontales à chaque fois sur la largeur de transport d'un dispositif de transport (1) et sont déposées vers un côté, **caractérisé en ce qu'**au moyen d'un dispositif de ramassage (6), constitué de dents de transport rotatives (10), du dispositif de transport (1), les matières en brins fauchées (12) soulevées de la surface du sol (11) pendant le transport ultérieur sont déviées sur un organe de réglage (17) réalisé sous forme de paroi de retenue, à partir d'une section de transport (13) approximativement horizontale du dispositif de transport (1), en utilisant le flux de transport (S) produit par le dispositif de ramassage (6) du dispositif de transport (1), et sont .déposées vers un côté des matières en brins (12) se trouvant sur la surface du sol (11).

2. Procédé selon la revendication 1, **caractérisé en ce que**, par la passe de récupération suivante respective, les matières en brins (12) déposées vers le côté des matières en brins (12) se trouvant sur la surface du sol (11) sont soulevées sur la largeur de transport du dispositif de transport (1) avec les matières en brins (12) se trouvant sur la surface du sol (11) et sont déposées vers le côté des matières en brins couchées (12).

3. Procédé selon la revendication 1 ou 2, **caractérisé en ce que** la récupération des matières en brins (12) se trouvant sur la surface du sol (11) s'effectue dans des passes de récupération, respectivement des cycles de récupération, parallèles.

4. Procédé selon l'une quelconque des revendications 1 à 3, **caractérisé en ce que** les matières en brins (12) sont transportées vers le haut sur une voie courbée sur la paroi de retenue.

5. Procédé selon l'une quelconque des revendications 1 à 4, **caractérisé en ce qu'**après avoir été soulevées de la surface du sol (11), les matières en brins (12) sont transférées sur une section de transport horizontale (13) du dispositif de transport (1) sur la paroi de retenue.

6. Procédé selon l'une quelconque des revendications 1 à 5, **caractérisé en ce que** les matières en brins (12) sont déposées vers le côté des matières en brins couchées (12) en formant un andin.

7. Dispositif de transport (1), pouvant être monté sur le côté frontal d'une machine de travail (3) à un essieu guidée de manière dirigeable manuellement au niveau de mancherons (5) et pouvant être relié par entraînement à un arbre de prise de mouvement avant de la machine de travail (3), pour mettre en oeuvre le procédé selon l'une quelconque des revendications 1 à 6, comprenant un dispositif de ramassage (6) ramassant les matières en brins fauchées (12) au moyen de dents de transport rotatives (10) à partir de la surface du sol (11) et un organe de réglage (17) connecté en aval de celui-ci dans le sens de transport, s'étendant transversalement au sens de déplacement (F) et déviant les matières en brins (12) vers un côté, lequel organe de réglage présente une surface de glissement courbée de manière concave par rapport au flux de transport (S), **caractérisé en ce qu'**une section de transport horizontale (13) du dispositif de transport (1), laquelle transporte ultérieurement les matières en brins (12) approximativement horizontalement et se raccorde au dispositif de ramassage (6), est disposée entre le dispositif de ramassage (6) et l'organe de réglage (17).

8. Dispositif selon la revendication 7, dans lequel, sur un arbre (8) monté transversalement au sens de déplacement (F) du dispositif de ramassage (6) du dispositif de transport (1), sont prévues des roues à dents (9) juxtaposées et tournant ensemble, entre lesquelles sont disposées des lamelles de guidage (15) d'un organe de guidage (14), **caractérisé en ce que** la section de transport (13), se raccordant au dispositif de ramassage (6) dans le sens de transport, du dispositif de transport (1) est formée par des lamelles de support (16) placées contre les lamelles de guidage (15).

9. Dispositif selon la revendication 7 ou 8, **caractérisé en ce que** l'organe de réglage (17) est réalisé de manière orientée approximativement perpendiculairement à la surface du sol (11) à l'extrémité supérieure.

10. Dispositif selon la revendication 8 ou 9, **caractérisé en ce que** l'organe de réglage (17) présente au moins une section transversale de passage élargie avant une extrémité de transport latérale.

11. Dispositif selon l'une quelconque des revendications 8 à 10, **caractérisé en ce que** l'extrémité de transport de la section de transport (13) du dispositif de transport (1) est formée par un élément de transfert (19) reposant sur l'extrémité avant de l'organe de réglage (17).

12. Dispositif selon l'une quelconque des revendications 8 à 11, **caractérisé en ce que** le dispositif de transport (1) est formé par au moins un rouleau de support (20) relié au châssis (2).

13. Dispositif selon l'une quelconque des revendications 7 à 12, **caractérisé en ce qu'**un rouleau-guide (21) comprenant un boudin (22) est disposé à proximité d'un rouleau de support (20).

14. Dispositif selon la revendication 13, **caractérisé en ce que** le rouleau-guide (21) est réalisé de manière déplaçable en hauteur par rapport au rouleau de support (20).

15. Dispositif selon la revendication 13 ou 14, **caractérisé en ce que** les rouleaux-guides (21) sont disposés à l'extérieur d'un rouleau de support (20), considéré dans le sens de déplacement de la machine.
